(19) Europäisches Patentamt
European Patent Office
Office européen des brevets

(11) **EP 2 108 884 A1**

(12) **EUROPEAN PATENT APPLICATION**


(43) Date of publication:
**14.10.2009 Bulletin 2009/42**

(51) Int Cl.:
***F21V 8/00*** *(2006.01)*

(21) Application number: **08154289.6**

(22) Date of filing: **09.04.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**



(71) Applicant: **Barco NV**
**8500 Kortrijk (BE)**

(72) Inventors:
- **Schroeyers, Marc**
  **8000 Brugge (BE)**
- **Blomme, Tom**
  **8650 Klerken (BE)**
- **Debonnet, Jeroen**
  **8510 Marke (BE)**
- **De Paepe, Kristiaan**
  **9000 Gent (BE)**

(74) Representative: **Bird, William Edward et al**
**Bird Goën & Co.**
**Klein Dalenstraat 42A**
**3020 Winksele (BE)**


# (54) Backlight light control


(57) A backlight for a display has an edgelit panel (250), and two or more light sources (210) arranged to supply light to one or more edges of the edgelit panel, a mixing section (230) for guiding the light from the light sources to mix the light before it enters the edge or edges, and a heatsink (200) thermally coupled to the light sources. The heatsink is integral with at least part of the mixing section. By making the heatsink integral with at least part of the mixing section, volume of the backlight can be reduced, or the heatsink can be enlarged. This means the operating temperature of the light sources can be maintained better for a given thermal output and a given volume of backlight, and so reduce unwanted variations in backlight output colour or luminance over time or space. A fan (280) can provide a counterstream to counter convection induced temperature differences.


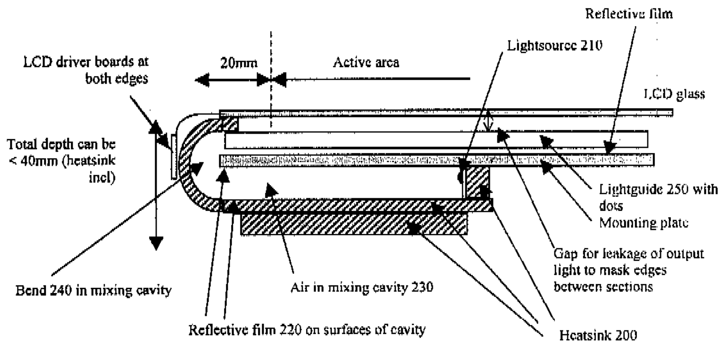


FIG 1

EP 2 108 884 A1

## Description

**Field of the invention:** This invention relates to backlights for displays such as transmissive displays, e.g. those using light valves such as liquid crystal devices and to corresponding systems and methods.

## Description of the Related Art:

Displays such as reference monitors and others need to have a very high luminance and color uniformity over the entire screen area, as well as a wide, controllable and stable color gamut (well defined color triangle). The last requirement has lead to the use of R-G-B LED light sources in the backlight.

But in order to get a uniform white light output over the entire screen starting from the discrete red, green and blue point-like light sources, one has to incorporate long optical mixing lengths. This leads to a display with a large depth. In a practical situation not more than approximately 50mm is available for the complete backlight assembly, so this is also the largest available mixing length. This mixing length is hardly sufficient to arrive at the required color uniformity.

Another specification of a reference monitor is the ability to visualize in a natural way fast movements, without showing motion blur or other motion artifacts. Due to the hold-type representation of images on a LCD screen, motion artifacts will be visible. A possible solution to avoid these artefacts is using a scanning type backlight, composed of a certain number of separately lit sections, typically in the form of horizontal light trays. Each of these trays is illuminated individually, and is optically isolated from its neighbouring trays. These trays are illuminated time sequentially in synchronisation with the addressing of the LCD rows, in such a manner that the slow response of the LCD liquid crystal cells is masked by such events occurring during the dark (non illuminated) time zones. But such backlight scanning has not been widely used in high end applications as it increases complexity, can introduce more unwanted artifacts and reduces dimming range.

The intensity output of some light sources, in particular of solid state light sources, such as LEDs, can vary according to factors such as temperature and age. Consequently, conventional LED based backlights and others do not reliably maintain a desired intensity and/or colour during their lifetime. In a typical multi-colour based backlight, e.g. an RGB backlight, a plurality of optical sensors, e.g. 3 in the case of an RGB backlight, are based in the backlight cavity. Each optical sensor is read out by a control device that compensates the drive settings to the correct or desired white point, based on the read out luminance values. Typically, the three optical sensors are placed in one package and have a given spectral response. Because the colour filters of the optical sensors are overlapping, there is an influence of the other colours during readout. For example, if one reads out GREEN, also a part of RED and BLUE is in the end result. It can be seen that, when RED is switched off while GREEN is still on, the red sensor will still sense some light, i.e. that part of the GREEN which is in the wavelength range detectable by the red sensor. In typical systems, the LEDs are driven by PWM (pulse width modulation), and sensor values are integrated to DC for measurements. This results in very slow response times and if high dimming ratio is required, it can also lead to high resolution and expensive A/D converters being required. To avoid the effect of interference of other colours in the optical sensors, colour sequencing can be used, but this may result in colour break-up and lower dimming ratios.

WO 2006/0290624 shows a backlight with RGB LEDs, and a colour sensor for detecting and feeding back chromaticity and colour intensity for use in controlling the relative drive levels of the single set of RGB LEDs to maintain a desired colour of the overall display. LED junction temperature is also monitored.

US 2006/0290844 shows an edgelit backlight having multiple coloured LEDs in a reflecting cavity used for mixing, a base of the cavity also being used for electrical connections and as a heatsink. Light passes from this into a light guide panel for back illuminating a display device.

## Summary of the Invention:

An object of the invention is to provide to backlights for displays such as transmissive displays, e.g. those using light valves such as liquid crystal devices and to corresponding systems and methods. According to a first aspect, the invention provides: A backlight for a display, the backlight having an edgelit panel, and two or more light sources arranged to supply light to one or more edges of the edgelit panel, the backlight also having a mixing section for guiding the light from the light sources so as to mix the light before it enters the edge or edges, and having a heatsink thermally coupled to the light sources, the heatsink being integral with at least part of the mixing section. By making the heatsink integral with at least part of the mixing section, rather than having two separate parts in different places, the overall volume of the backlight can be reduced, or the heatsink can be enlarged. This means the operating temperature of the light sources can be maintained better for a given thermal output and a given volume of backlight. This maintenance of operating temperature can help reduce unwanted variations in backlight output colour or luminance over time or space for example.

Embodiments of the invention can have any other features added, some such additional features are set out in dependent claims and described in more detail below.

Another aspect provides a backlight for a display, the backlight having an edgelit panel, and two or more light sources arranged to supply light to one or more edges of the edgelit panel, the backlight also having a mixing section for guiding the light from the light sources so as to mix the light before it enters the edge or edges, and having a heatsink thermally coupled to the light sources, the heatsink having a fluid forcing device to induce fluid flow over surfaces of the heatsink in such a way as to counter convection induced temperature differences. The forced fluid flow can be a downdraft over a vertical surface of the heat sink.

Any of the additional features can be combined together and combined with any of the aspects. Other advantages will be apparent to those skilled in the art, especially over other prior art. Numerous variations and modifications can be made without departing from the claims of the present invention. Therefore, it should be clearly understood that the form of the present invention is illustrative only and is not intended to limit the scope of the present invention.

**Brief Description of the Drawings:**

How the present invention may be put into effect will now be described by way of example with reference to the appended drawings, in which:

Figure 1 shows an embodiment of the invention showing a top view in cross section of a backlight for a display, with a heatsink integral with part of the mixing section,
Figure 2 shows a back view of an embodiment of the invention having heatsinks for multiple separately illuminated sections,
Figure 3 shows a side view of the embodiment of figure 2,
Figures 4 and 5 show schematic views of control loops for control of LEDs,
Figure 6 shows a flow chart of measurement of color, using a monochrome light sensor, and
Figures 7 to 10 show views and graphs relating to scanning control.

**Description of the Preferred Embodiments:**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. Where the term "comprising" is used in the present description and claims, it does not exclude other elements or steps. Where an indefinite or definite article is used when referring to a singular noun e.g. "a" or "an", "the", this includes a plural of that noun unless something else is specifically stated.

The term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

It is to be noticed that the term "comprising", used in the claims, should not be interpreted as being restricted to the means listed thereafter; it does not exclude other elements or steps. It is thus to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to one of ordinary skill in the art from this disclosure, in one or more embodiments.

Similarly it should be appreciated that in the description of exemplary embodiments of the invention, various features of the invention are sometimes grouped together in a single embodiment, figure, or description thereof for the purpose of streamlining the disclosure and aiding in the understanding of one or more of the various inventive aspects. This method of disclosure, however, is not to be interpreted as reflecting an intention that the claimed invention requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

Furthermore, while some embodiments described herein include some but not other features included in other embodiments, combinations of features of different embodiments are meant to be within the scope of the invention, and form different embodiments, as would be understood by those in the art. For example, in the following claims, any of the claimed embodiments can be used in any combination.

In the description provided herein, numerous specific details are set forth. However, it is understood that embodiments of the invention may be practiced without these specific details. In other instances, well-known methods, structures and techniques have not been shown in detail in order not to obscure an understanding of this description.

The invention will now be described by a detailed description of several embodiments of the invention. It is clear that other embodiments of the invention can be configured according to the knowledge of persons skilled in the art without departing from the technical teaching of the invention, the invention being limited only by the terms of the appended claims.

Additional features:

Embodiments can have any additional features as well as those features set out in the independent claims. Some additional features are as follows:

The backlight can be a scanning backlight comprising a number of separately illuminated sections. In this case, there is an additional constraint of reducing differences in light output between the different sections, and so temperature differences between the sections should be reduced. It becomes easier to do this with heatsinks integral with the mixing sections. Reference is made to figures 2, 3 and 7 at least.

The mixing sections can comprise a bend to guide the light around at least 45 degrees, e.g. 90 degrees, 120degrees or 180 degrees. This can enable the light sources to be arranged more compactly around the edges or on the back of the edgelit panel for example and can enable more mixing in a shorter overall length than a straight section.

The mixing section can comprise a bend of 180 degrees, and the light sources be arranged at the back of the edgelit panel. This helps keep the backlight compact. Reference is made to figure 1 described below.

The heatsinks for different ones of the separately illuminated sections can be arranged one above the other. This can help provide thermal coupling between the heatsinks to reduce temperature differences. Reference is made to figure 2 described below.

The heatsink forming the mixing section can be formed with a cavity for guiding the light. A reflective coating or film can be placed on surfaces of the cavity. This can provide alternative or better mixing in a shorter length than alternatives such as guiding the light by total internal reflection in a solid material such as PMMA for example. Reference is made to figure 1 described below.

The heatsink can comprise a fluid forcing device to induce fluid flow over surfaces of the heatsink in such a way as to counter convection induced temperature differences. The forced fluid flow can be a downdraft over a vertical surface of the heat sink. This can help maintain a stable and even temperature across different parts of the backlight, for example from top to bottom of the backlight, and so reduce spatial differences in light output by the backlight. Reference is made to figure 2 described below.

The backlight can have temperature sensors on at least one or on at least some or all of the separately illuminated sections, for example at least near the top and bottom of the backlight. These can be used as inputs to control loops for controlling the light sources directly or controlling light output indirectly by controlling the forced cooling for example. Reference is made to figures 2, 3 and 4 for example.

The backlight can have separate luminance sensors for detecting luminance levels of different ones of at least some of the separately lit sections, the controller being arranged to control the luminance levels according to outputs of the separate luminance sensors. This can avoid the need for a colour sensor for each section and so can enable reduced costs, by recognizing that luminance typically should be sensed and controlled more actively and rapidly than the colour output. This is described below with regard to figure 4 and 6 at least.

The controller can be arranged to determine and store colour calibration settings using the colour sensor when the backlight is not in use, and to control the luminance levels when the backlight is in use according to the stored colour calibration settings and according to outputs of the separate luminance sensors. This can be useful if the colour sensing needs more time than can be accommodated in brief frame blanking intervals for example. This is described below with regard to figures 4 and 5 at least.
The controller can be arranged to allow illumination of one of the sections and to detect the colour characteristic for that section while only that section is illuminated. This is useful to enable colour drift in each section to be detected rapidly. This is described below with regard to figure 6 at least.
The backlight can be incorporated with a transmissive display panel in an output light path of the backlight, and the colour sensor can be located in a light mixing area between the backlight and the display panel. This is useful to enable the sensing to be independent of colour shifts introduced by the display panel. This is described below with regard to figures 1 and 3 at least.
The backlight can be incorporated with a transmissive display panel in an output light path of the backlight, and can have an additional colour sensor in the light path after the display panel. This is useful to enable compensation of colour shifts introduced by the display panel. This is described below with regard to figure 3.
The backlight can have multiple light sources of different colours, the controller being arranged to cause a single colour to be on for a period, and to sense their luminance output level at least, at that period. This is useful to enable detection and compensation for overall colour shifts caused by luminance level changes in different colour sources. This is described below with regard to figure 6 at least.
The backlight can have multiple colour sensors located in the output light paths of different ones of the sections. This is typically more expensive, but could enable more rapid sensing and simpler control than using a single colour sensor for all sections. This is described below with regard to figures 1 and 3 at least.
The sections can be arranged to have light sources arranged to light their respective section from an edge of the section, the light sources having a number of different colours and a mixing section for mixing the light before it enters the edge of the section, the mixing section having a bend of at least 45 degrees, e.g. 90, 120, or 180 degrees. The bend can help enable the mixing to take place in an overall shorter distance, to keep the backlight more compact. This is described below in relation to figure 1 at least.
The backlight can be incorporated with a transmissive display panel in an output light path of the backlight, and can have a light mixing area between the backlight and the display panel, the sections being arranged to allow some overlap of light between neighbouring sections in this light mixing area. This can help to make the boundaries between sections less visible to viewers. This is described with regard to figure 1 at least.

Figure 1: backlight incorporated in display

Figure 1 shows some of the principal parts of an embodiment of the invention.

Figure 1 shows a top or bottom view of a backlight according to an embodiment, formed of one or many separately lit sections. This shows a mixing section in the form of a cavity 230 in the heatsink 200. The cavity guides light around a bend 240, to supply light from light sources 210 on the back of the device, into edges of the edgelit panel in the form of lightguide 250 of PMMA mounted on a mounting plate. Optionally the mounting plate need not be a separate item and the rigidity it provides can provided by other parts. The light sources can be light sources of multiple colours, e.g. LEDs of multiple colours, individually controllable, or can be other light sources.

A reflective coating or film 220 can be provided on the inner surfaces of the cavity. This can be implemented using conventional reflective materials known to those skilled in the art, such as by gluing metal foil to the surfaces. It should provide greater than 98% reflectivity, or in some cases at least 95%. A gap is shown between the backlight and the facing glass plate of the LCD array which provides the transmissive display. This gap allows some controlled light leakage between sections to mask the boundaries between sections. Drive circuitry for the LCD array can be located at the edges, and drive circuitry for the LEDs can be located on the back of the device. A typical total depth can be around 40mm including heatsinks. A 20mm blank area can be provided as a frame around the active area.

A reflective layer can also be provided between the mounting plate and the PMMA edgelit panel to reduce leakage and improve efficiency.

The backlight can in some embodiments be a scanning backlight incorporated in a light valve device such as an LCD device. An LCD device has an array of LCD pixels, driven by drive circuitry. This may include for example a frame buffer or other circuitry, fed by an input video signal for display. The scanning backlight can have a backlight scan control part synchronised by an input from the drive circuitry. The scan control drives light sources 210, and can feed a backlight colour control part. The colour control part can influence the output of the light sources. The colour control part is fed by a colour sensor, and luminance sensors for each scan section. The luminance sensors can in some embodiments be replaced by one or more colour sensors.

Figure 2, back view

This figure shows a back view of an embodiment. 6 horizontal sections are shown, each having 2 light sources and 2 mixing sections, for supplying light to left and right edges of the edgelit panel. Hence there are 12 separately illuminated sections (or 6 sections if the left and right edge sources both feed a common section. The heatsinks for all the left side light sources are arranged one above the other so that there is thermal coupling between them. The same is done on the right side. As shown, a fluid forcing device such as a fan may be arranged to cause airflow over the heatsinks. If the fan is above the heatsinks when blowing or located below the heatsinks if sucking, then it can provide a downdraft counter stream to counter natural convectional air flow up the heatsinks, and help reduce temperature differences across different parts of the panel. Temperature sensors can be provided at top and bottom of the stacks of heatsinks, or in other locations, for use in controlling the fans, or in controlling the light sources directly.

<u>Figure 3; backlight topology</u>

Figure 3 shows a side view of a backlight topology according to an embodiment. Each section has a horizontal lightguide such as a PMMA lightguide. They are edge lit by a light source arranged with a folded mixing path having a 180 degree bend to enable a notably thin backlight. Other bending arrangements can be envisaged, such as a 60 to 90 degree bend in the main plane of the device, in which case the light sources would be arranged around the edge rather than on the back of the edgelit panel. These arrangements can provide a long inherent mixing length with, as a consequence, a high luminance and color uniformity. Above that the construction allows horizontal partitioning of the light paths to provide sections. A scanning backlight drive scheme is incorporated.

Each section has its own light sensor on the LED driver circuit. A temperature sensor is shown on the driver circuits. A spectrometer is shown located at the back of the device, fed by a light path in any suitable form, e.g. via a PMMA lightguide or reflected from a mirror. Optionally an additional colour sensor can be provided on the far side of the array of LCD pixels.

Between separately lit sections of the edgelit panel there can be light barriers or reflective films. An additional light mixing area is added between the front of the lightguides and the rear of the LCD panel with its optical foils. This extra mixing volume has a twofold function:

Firstly it introduces additional light mixing between lightrays from the edges of any 2 neighbour lightguide-trays such that the gap between these trays is not visible when looking from the front of the LCD panel.

Secondly this area provides also the space needed for positioning an extra common light sensor that will measure the light output from the individual lightguide trays, this in order to adapt via a feedback loop intensity and color point such that the required uniformity can be achieved.

<u>Figure 4, backlight control loop</u>

Figure 4 shows another embodiment of the invention showing parts of the backlight. The light sources are shown in the form of 3 light sources such as LEDs, typically Red, Green and Blue, to mix into white light. These are driven by an LED driver, e.g. having current control and PWM control parts. There can be separate sets of LEDs and separate drivers for each section (not shown for clarity). The LED driver is controlled by a controller, which is arranged to drive the LEDs, and can control many sections, to achieve a uniform output across sections, and to maintain a desired balance between different colour LEDs to achieve the desired output white. The controller can be fed by a temperature input from a temperature sensor as shown. The controller can also be fed by optical sensors such as colour or luminance sensors detecting the light output of the LEDs. There can be one or more colour sensors, and in some embodiments there are luminance sensors for each section, or colour sensors for each section. The sensor outputs are fed to a sample and hold device (S and H). The outputs of these sample and hold devices are stored in a memory (MEM), for use by the controller. The timing of the sampling can be synchronized by the controller, to coincide with a single one of the LEDs being driven so that the stored value represents the luminance or colour of a single LED. For optical sensors arranged in the light path of multiple sections, then the controller can be arranged to illuminate only one of the sections at a time, so that the sampled value relates to only one of the sections.

<u>Figure 5 control loops for control of LEDs</u>

Figure 5 shows a schematic view of inter-relationships of control loops for an example having 6 sections. The control loops may be embodied in one or more controllers. Each section has two sets of 4 LEDs, one set for each end of a horizontal tray. Hence there are 48 individual LED-circuits. Their outputs can be measured separately by monochrome sensors as will be described in more detail below, measuring the absolute light-power output. This measurement system is compensated with the temperature data gathered by the thermal sensors placed on board, near the optical sensor elements.

There is also a colour sensor in the form of a spectrometer to provide information on the spectrum of the generated light, such as peak wavelength or colour intensity, allowing the system to compensate for drifts in spectral behavior of the monochrome sensors and for drifts in spectral emission of the LED's. This measurement loop is backed-up by four temperature sensors placed on the LED cooling ribs.

The unique combination of these different loops is that each provides a check or compensation method for the other loops, allow each to be kept in calibration.

Calibration can involve all 6 monochrome light sensors being factory calibrated. A first calibration loop can involve measuring separately the monochrome brightness of all 3 colors of all 6 trays (= 18 measurements). This can be carried out by illuminating different LEDs separately using the time-shift method as described below.

Based on the measurements, the PWM control level of the LED drivers is then carried out, to ensure a uniform backlight: so that there is equal power on all colors of all trays.

This can include taking account of any non linear relationship between what the eye perceives and light power.

A second calibration loop, e.g. embodied in the same or a different controller involves the colour sensor in the form of the spectrometer. This measures spectral or chromatic characteristics of light, integrated over a longer time are measured. On the basis of these measurements, a global PWM drive level adjustment can be made, and video 3x3 matrices for generating RGB values from the video input, can be adjusted to ensure a good or exact color triangle matching.

Figure 6: flow chart of measurement of color using a monochrome light sensor

Figure 6 shows a flow chart for a measurement and control process. By using pulsed operation of the light sources of the backlight, a black timeslot of about 200 μs, 6 times every frame (at 120Hz) for example, is created. By shifting 1 of the 3 colors of a specific tray 200μs to the right, this color will be the ONLY light generated in the complete backlight during this 200μs timeslot. This makes it possible, using a monochrome light sensor mounted on that specific tray, to measure the light coming from only that tray.

Initially as shown, a mixed colour point and luminance is set. Next the flow chart divides according to whether a high level of dimming is needed. For little dimming, a first step is to shift Red to the sampling timeslot. Red luminance is sampled and stored. This is repeated for Green, then Blue, though a different order can be used. Temperature is then sampled, wavelength shift for that temperature is determined, and RGB drive values are recalculated and used.

For a high dimming scenario, there is less time available for the shifting as the backlight is not on for so much time. Latest available luminance settings and temperature are read. LED temperature is sampled. Required temperature compensation is calculated, and change drive settings accordingly.

Figures 7 to 10: scanning control

Figure 7 shows the backlight and the array of light valve elements, e.g. liquid crystal elements. In this view, the directions of scanning of the array and the backlight are shown.

Figure 8 shows a pixel response curve indicating a pixel transmission level over time for an individual pixel in an LCD array. In a first addressing frame time, there is an upward curve labeled as the pixel response time, followed by a flat region for the rest of the frame time, marked as the illumination frame. This unshaded region can indicate a time when the backlight is illuminated. The next frame can be a black insertion time, in which case the pixel is driven to a black level during an addressing frame and remains there for the subsequent illumination frame.

Figure 9 shows a graph of frame delays relative to vertical position of a given pixel. It shows how with vertical position of the pixel, the illumination frame and addressing frames are delayed by different amounts in accordance with a scanning scheme.

Figure 10 shows a similar view for delay relative to vertical position of different trays of a backlight. The lines show a response of an individual pixel at the top of the respective tray. The rectangles show times when the tray is lit. It shows how there is a corresponding relative delay between trays according to a vertical position of the tray.

Control of luminance and/or colour

Embodiments of the backlight system can comprise a plurality of coloured light-emitting diodes (LEDs) of different colours, such as LEDs of three colours, e.g. red, green and blue (RGB) LEDs. The plurality of LEDs may be combined into a plurality of colour channels, e.g. in the example given above a red, a green and a blue colour channel. The LEDs may be arranged in a planar matrix functioning as a backlight for an instrument display, such as an LCD display. The LCD is translucent and some of the light generated by the LED matrix behind the LCD display passes through the display, illuminating the display. Such display arrangements may be used in avionics or vehicular applications, but also in desktop applications, requiring varying backlight levels for example.

The LEDs are controlled by a LED driver generating control signals such as e.g. a drive current control signal and a pulse width modulation (PWM) control signal. The drive current control signal controls the current flowing through the LEDs. The PWM control signal controls the power to the LEDs. The combination of the drive current control signal and the PWM control signal to an LED determines the ON time and the emitted luminance of the LEDs.

The LED driver itself is preferably controlled by a controller. The controller may include a digital processing or computing device, e.g. a microprocessor, for instance it may be a micro-controller. In particular, it may include a programmable LED driver controller, for instance a programmable logic device such as a Programmable Array Logic (PAL), a Programmable Logic Array (PLA), a Programmable Gate Array (PGA), especially a Field Programmable Gate Array (FPGA). The controller may be programmed by suitable software that carries out any of the methods of the present invention. In particular the software may include code that executes a method for controlling an illumination system comprising a plurality of coloured light sources, there being at least one or more light sources of a first colour and one or more light sources of a second colour, the first colour being different from the second colour, the illumination system being for emitting illumination light when executed on a suitable processing device.

The software may include software for determining first drive settings for each of the plurality of coloured light sources so as to provide illumination light with a pre-determined colour point and/or a pre-determined luminance, the first drive settings generating an ON time and an OFF time of the light sources, for the light sources of the first colour, changing the first drive settings so that the ON time of the light sources of the first colour does not coincide with the ON time of the light sources of the other colours for at least a period of time, during that period of time, measuring the peak luminance of the light sources of the first colour, based on the measured peak luminance for the light sources of the first colour, recalculating the drive settings into second drive settings so as to maintain pre-determined colour point, and repeating the above steps for at least the light sources of the second colour.

The software may also include code whereby the first drive settings comprise current control and pulse width modulation control. The software may also include code for directly or indirectly measuring temperature of the coloured light sources.

The controller may store calibration values of all colours such as luminance at full duty, temperature, colour, mixed colour set point.

The optical sensor may be a photodiode. The optical sensor may be any sensor that covers a spectral range of interest, depending on the light sources in the illumination system, e.g. a sensor that covers the visible spectral range. The optical sensor may e.g. have a spectral range from 400 to 700nm. The optical sensor may be placed in the backlight cavity. Using such single sensor rather than using a plurality of dedicated colour sensors alleviates the use of expensive optical filters to be used for the sensor, and thus reduces the cost of the system. Using a single circuit furthermore prevents differential ageing.

Optionally, the backlight system in accordance with embodiments of the present invention may also be provided with a temperature sensor, for sensing the temperature of the LEDs.

The controller reads out from the sensors the optical sensor value and optionally ambient conditions such as LED temperature. Based on these measurements, and by comparing the sensed luminance with the pre-determined or desired luminance, correction values for the drive signals to the LEDs are determined. This is done during real-time, i.e. measurements are made and corrections to the drive signals are applied while the light source is in use for a real application. With "in use for a real application" is meant, e.g. for a backlit display, while data content is being displayed to a user, rather than during calibration or during setting-up of the display system. The corrections are so as to obtain a controlled colour point and/or luminance of the light source, e.g. backlight.

Ambient light may furthermore also be measured by means of an ambient light sensor (not illustrated), in order to determine the amount of dimming required, or thus the desired luminance.

If the duty cycle is high enough, i.e. if the pulse width of the shortest colour pulse is larger than the addition of the response time of the sensor and the sample time, i.e. at low dimming and thus at high brightness, the system selects a first colour to measure the luminance, e.g. RED. In order to be able to measure the RED, the driving of the RED is shifted in time from the GREEN and the BLUE so that the RED light source (or the light sources of the red colour channel) is (are) energised or driven at a moment in time when the other, e.g. GREEN and BLUE, light sources are not driven. The first light source is thus driven separately from the other light sources. Because the peak value of the luminance is measured, this shift time can be very short (response time of the sensor). In one example, the shift time has a length of 5μs. After the value is stable (depending on the response time of the optical sensor, in the example given about 2μs), a sample and hold circuit saves the luminance value in a memory. This sample and hold action requires about 2 to 3μs. The moment the luminance value is sampled, there is no interference from the other colours, so a clear luminance value for the particular colour can be obtained, without interference from the other colours present in the backlight.

From the measured value stored in a memory, the controller calculates the drive settings (current control signal and PWM control signal) to maintain the desired mixed colour point, e.g. white colour point. One of the colours is used as reference to regulate the mixed colour luminance.

A temperature sensor may be provided for sensing the temperature of the LEDs, Based on the measured temperature, a wavelength shift of the colour LEDs may be tracked by means of look-up tables indicating wavelength shift in function of temperature. The fractions of the colours are then recalculated by using new x,y-coordinates for the colours which have wavelength shifted, and these recalculated fractions are used as input for the luminance compensation. Calculation of such fractions is exemplified below. This sequence is repeated continuously or quasi-continuously for each colour.

Furthermore, in an alternative embodiment, the measurement of all colours may be intermixed with a luminance measurement performed at a moment in time when none of the colour channels are energised. This measures the offset value of the optical sensor, i.e. the luminance sensed when a value for black should be obtained, which offset value can be subtracted from the measured luminance values for the colour channels in order to obtain more accurate measurement values.

Because the PWM control signals are generated by the controller and peak luminance values are measured, the luminance can be calculated and regulated to the desired or required colour point, e.g. white point. This system does not require any recalibration or initiated calibration step to regulate the desired colour point, e.g. white point, over lifetime. Also, because only one sensor is used, there is no variation between the colour measurements (same response, same temperature behaviour, no differential ageing, etc.) which is a big advantage for colour stability and robustness of the system over lifetime and temperature range.

As an example, if the pulse width modulation has a frequency of 180Nz, one pulse width period has a duration of 5.5ms. If an optical sensor is used with a response time of 2μs, and the sample time is 3μs, then the shift time over which the driving of a selected colour for measurement purposes needs to be shifted is 5μs. Therefore, the dimming ratio is about 1100:1. For the same sensor, if a pulse width modulation with a frequency of 90Hz is used, the dimming ratio is about 2200:1. The shift time is about 0.01% of the PWM period.

Furthermore, for high dimming applications, embodiments can provide temperature compensation. If the luminance/duty cycle is very low, high dimming occurs. If the dimming ratio is higher than the response time of the sensor, PWM pulses are too short to be sampled, and the feedback system in accordance with embodiments of the present invention may be provided with switching means to switch the control to a temperature control algorithm based on lookup tables and the last luminance measurements. The system can automatically switches to temperature compensation based on the latest luminance values measured during high brightness or thus low dimming mode. The measured luminance and temperature values are used to calculate the driver settings to maintain the programmed colour point.

At this moment in time, as the temperature feedback is only used when almost no power is in the LED, the temperature of the LED can easily be determined by determining the LED die temperature. Typical power LEDs have a temperature drop ΔT (die - solder point) of 10K/W but if the duty cycle is > 1/2000 the temperature drop ΔT is negligible and the board temperature can be measured to know the LED die temperature. Depending on the used LED, technology dimming ratios of more than 15000:1 are possible.

Embodiments of the present invention can comprise control software in the form of a computer program product which provides the desired functionality when executed on a computing device, e.g. the controller. Further, the present invention includes a data carrier such as a CD-ROM or a diskette which stores the computer product in a machine readable form and which executes at least one of the methods of the invention when executed on a computing device. Nowadays, such software is often offered on the Internet or a company Intranet for download, hence the present invention includes transmitting the computer product according to the present invention over a local or wide area network. The computing device may include one of a microprocessor and an FPGA.

As an example only, the needed fractions $f_R$, $f_G$, $f_B$ of RED, GREEN and BLUE flux respectively, with given RED, GREEN and BLUE xy-coordinates ($x_R$, $y_R$), ($x_G$, $y_G$), ($x_B$, $y_B$), are calculated hereinafter, in order to produce a given 9000K white point, with given xy-coordinates ($x_W$, $y_W$).

In general, the needed fractions of the light sources are expressed in function of the xy-coordinates of the available RED, GREEN and BLUE light sources and in function of the xy-coordinates of the white point as follows:

$$\begin{pmatrix} f_R \\ f_G \\ f_B \end{pmatrix} = \underbrace{\begin{pmatrix} \frac{x_R}{y_R} & \frac{x_G}{y_G} & \frac{x_B}{y_B} \\ 1 & 1 & 1 \\ \frac{1-x_R-y_R}{y_R} & \frac{1-x_G-y_G}{y_G} & \frac{1-x_B-y_B}{y_B} \end{pmatrix}^{-1}}_{\text{Part A}} \underbrace{\begin{pmatrix} \frac{x_W}{y_W} \\ 1 \\ \frac{1-x_W-y_W}{y_W} \end{pmatrix}}_{\text{Part B}}$$

The explicit form of the inverse matrix is as follows:

$$A^{-1}=\begin{pmatrix} \frac{((-1+X_G)Y_B-(-1+X_B)Y_G)Y_R}{X_R(-Y_B+Y_G)+X_G(Y_B-Y_R)+X_B(-Y_G+Y_R)} & \frac{(-X_G(-1+Y_B)+X_B(-1+Y_G))Y_R}{X_R(Y_B-Y_G)+X_B(Y_G-Y_R)+X_G(-Y_B+Y_R)} & \frac{(X_GY_B-X_BY_G)Y_R}{X_R(-Y_B+Y_G)+X_G(Y_B-Y_R)+X_B(-Y_G+Y_R)} \\ -\frac{Y_G((-1+X_R)Y_B-(-1+X_B)Y_R)}{X_R(-Y_B+Y_G)+X_G(Y_B-Y_R)+X_B(-Y_G+Y_R)} & \frac{Y_G(-X_R(-1+Y_B)+X_B(-1+Y_R))}{X_R(-Y_B+Y_G)+X_G(Y_B-Y_R)+X_B(-Y_G+Y_R)} & -\frac{Y_G(X_RY_B-X_BY_R)}{X_R(-Y_B+Y_G)+X_G(Y_B-Y_R)+X_B(-Y_G+Y_R)} \\ \frac{Y_B((-1+X_R)Y_G-(-1+X_G)Y_R)}{X_R(Y_B-Y_G)+X_B(Y_G-Y_R)+X_G(-Y_B+Y_R)} & \frac{Y_B(-X_R(-1+Y_G)+X_G(-1+Y_R))}{X_R(Y_B-Y_G)+X_B(Y_G-Y_R)+X_G(-Y_B+Y_R)} & -\frac{Y_B(X_RY_G-X_GY_R)}{X_R(Y_B-Y_G)+X_B(Y_G-Y_R)+X_G(-Y_B+Y_R)} \end{pmatrix}$$

If, for R, G and B LEDs of a light source, with given colour coordinates:

$x_R$ = 0.700, $y_R$ = 0.299
$x_G$ = 0.206, $y_G$ = 0.709
$x_B$ = 0.161, $y_B$ = 0.020
the R, G and B flux fractions needed to produce 9000 K white light with
$x_W$ = 0.287 and $y_W$ = 0.296

are to be calculated, then substituting the x and y values of RED, GREEN and BLUE LEDs results in the numerical matrix:

$$A=\begin{pmatrix} 2.3411 & 0.2906 & 8.0500 \\ 1.0000 & 1.0000 & 1.0000 \\ 0.0033 & 0.1199 & 40.9500 \end{pmatrix}$$

The inverse of this matrix is:

$$A^{-1}=\begin{pmatrix} 0.4825 & -0.1292 & -0.0917 \\ -0.4838 & 1.1325 & 0.0675 \\ 0.0014 & -0.0033 & 0.0242 \end{pmatrix}$$

Substituting the $x_W$ and $y_W$ coordinates of the white point results in the column vector:

$$B=\begin{pmatrix} 0.9696 \\ 1.0000 \\ 1.4088 \end{pmatrix}$$

Finally, multiplying the inverted matrix by the column vector, results in the flux fractions:

$$\begin{pmatrix} f_R \\ f_G \\ f_B \end{pmatrix} = A \otimes B = \begin{pmatrix} 0.2094 \\ 0.7584 \\ 0.0322 \end{pmatrix}$$

Or stated in words: to produce 1 lm of white light (9000 K) with coordinates ($x_W$, $y_W$) = (0.287, 0.297) with the above-mentioned RED, GREEN and BLUE LEDs, the following fractions are needed:

RED = 0.21 lm

GREEN = 0.76 lm

BLUE = 0.03 lm

It is to be understood that although preferred embodiments, specific constructions and configurations, as well as materials, have been discussed herein for devices according to the present invention, various changes or modifications in form and detail may be made without departing from the scope and spirit of this invention. For example, any formulas given above are merely representative of procedures that may be used. Functionality may be added or deleted from the block diagrams and operations may be interchanged among functional blocks. Steps may be added or deleted to methods described, and other variations can be envisaged within the scope of the claims.

## Claims

1. A backlight for a display, the backlight having an edgelit panel (250), and two or more light sources (210) arranged to supply light to one or more edges of the edgelit panel, the backlight also having a mixing section (230) for guiding the light from the light sources so as to mix the light before it enters the edge or edges, and having a heatsink (200) thermally coupled to the light sources, the heatsink having a fluid forcing device (280) to induce fluid flow over surfaces of the heatsink in such a way as to counter convection induced temperature differences.

2. A backlight for a display, the backlight having an edgelit panel (250), and two or more light sources (210) arranged to supply light to one or more edges of the edgelit panel, the backlight also having a mixing section (230) for guiding the light from the light sources so as to mix the light before it enters the edge or edges, and having a heatsink (200) thermally coupled to the light sources, the heatsink being integral with at least part of the mixing section.

3. The backlight of claim 1 or 2, wherein the heatsink has a vertical surface and fluid flow over the vertical surface of the heatsink is in the opposite direction to convection induced by temperature differences.

4. The backlight according to any previous claims comprising a number of separately illuminated sections.

5. The backlight of any previous claim, the mixing section having a bend (240) to guide the light around 180 degrees and the light sources being arranged at the back of the edgelit panel or having a bend (240) to guide the light around at least 60 degrees.

6. The backlight of any of the claims 4 to 5, the heatsinks for different ones of the separately illuminated sections being arranged one above the other.

7. The backlight of any preceding claim, wherein the heatsink forming the mixing section has a cavity (230) for guiding the light, and has a reflective film (220) on surfaces of the cavity.

8. The backlight of any preceding claim and having a fluid forcing device (280) to induce the fluid flow over surfaces of the heatsink in such a way as to counter convection induced temperature differences.

9. The backlight of any of the claims 4 to 8, having one or more temperature sensors (290) for sensing temperature of the light sources of at least some of the separately illuminated sections.

10. The backlight of claim 9 and having one or more luminance sensors for detecting luminance levels of the light sources and having a controller arranged to control the luminance levels according to outputs of the luminance sensors and the one or more temperature sensors.

11. A controller for a backlight comprising two or more light sources (210) and a number of separately illuminated sections and having temperature sensors on at least one or on at least some or all of the separately illuminated sections, an output of the one or more temperature sensors being input to the controller for controlling light output of the two or more light sources directly or indirectly.

12. A controller according to claim 11, wherein the back light has a heatsink (200) thermally coupled to the light sources, the heatsink having a fluid forcing device (280) to induce fluid flow over surfaces of the heatsink in such a way as to counter convection induced temperature differences, the controller controlling the light output of the at least two light sources by controlling the forced cooling.

13. A controller according to claim 11 or 12, wherein the backlight has separate luminance sensors for detecting luminance levels of different ones of at least some of the separately illuminated sections, the controller being arranged to control the luminance levels according to outputs of the separate luminance sensors.

14. A controller according to any of claims 11 to 13, the backlight having a colour sensor, the controller being arranged to determine and store colour calibration settings using the colour sensor when the backlight is not in use, and to control the luminance levels of the at least two light sources when the backlight is in use according to the stored colour calibration settings and according to outputs of the separate luminance sensors.

15. A controller according to any of claims 11 to 14, arranged to allow illumination of one of the separately illuminated sections and to detect the colour characteristic for that section while only that section is illuminated.

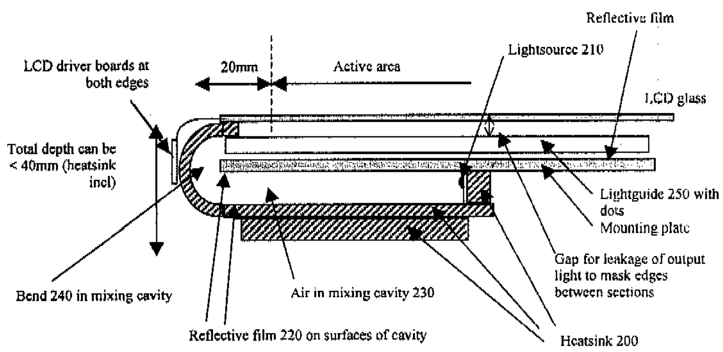


FIG 1

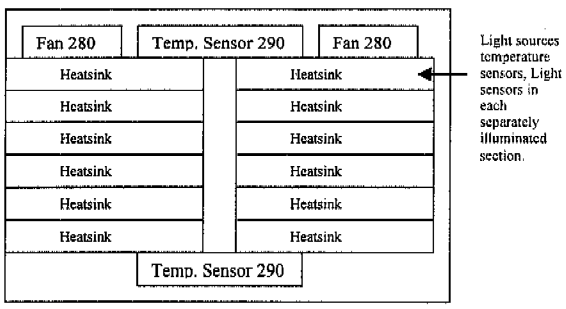


FIG 2 Back view

Side view

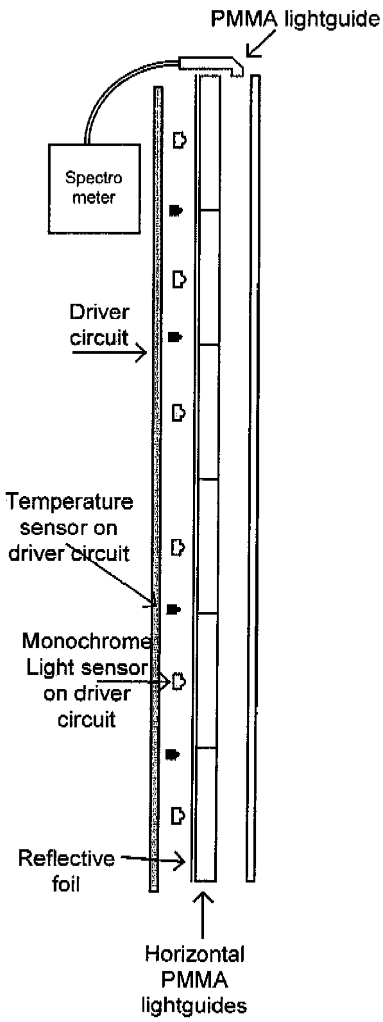


FIG 3

FIG 4

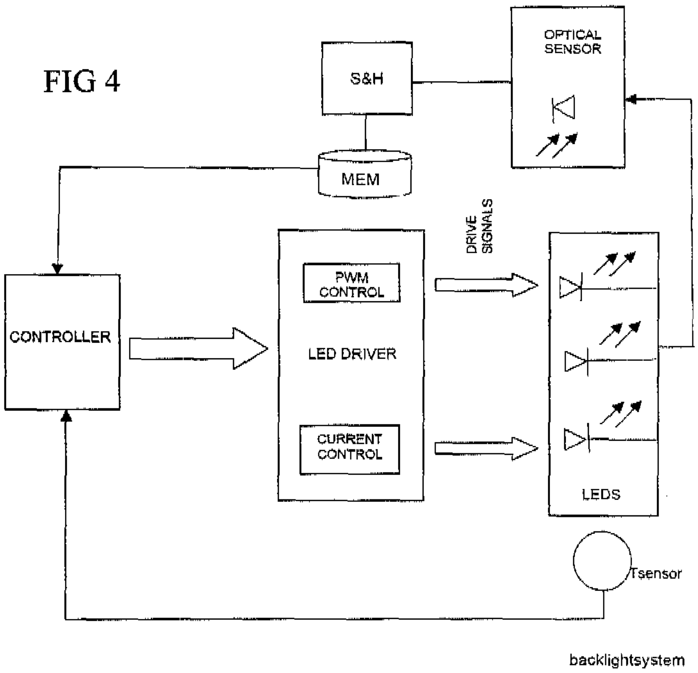
OPTICAL SENSOR
S&H
MEM
DRIVE SIGNALS
PWM CONTROL
CONTROLLER
LED DRIVER
CURRENT CONTROL
LEDS
Tsensor
backlightsystem

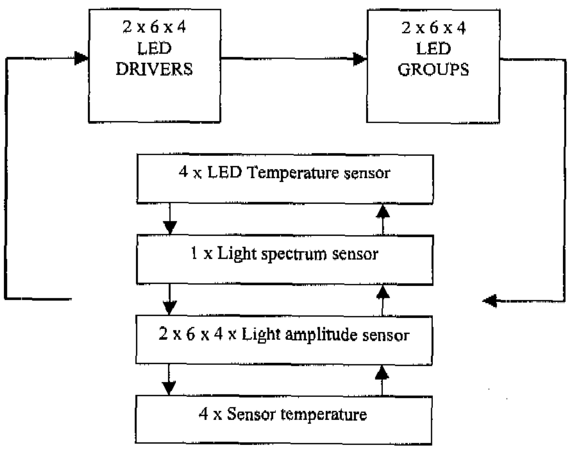
2 x 6 x 4 LED DRIVERS
2 x 6 x 4 LED GROUPS
4 x LED Temperature sensor
1 x Light spectrum sensor
2 x 6 x 4 x Light amplitude sensor
4 x Sensor temperature

FIG 5

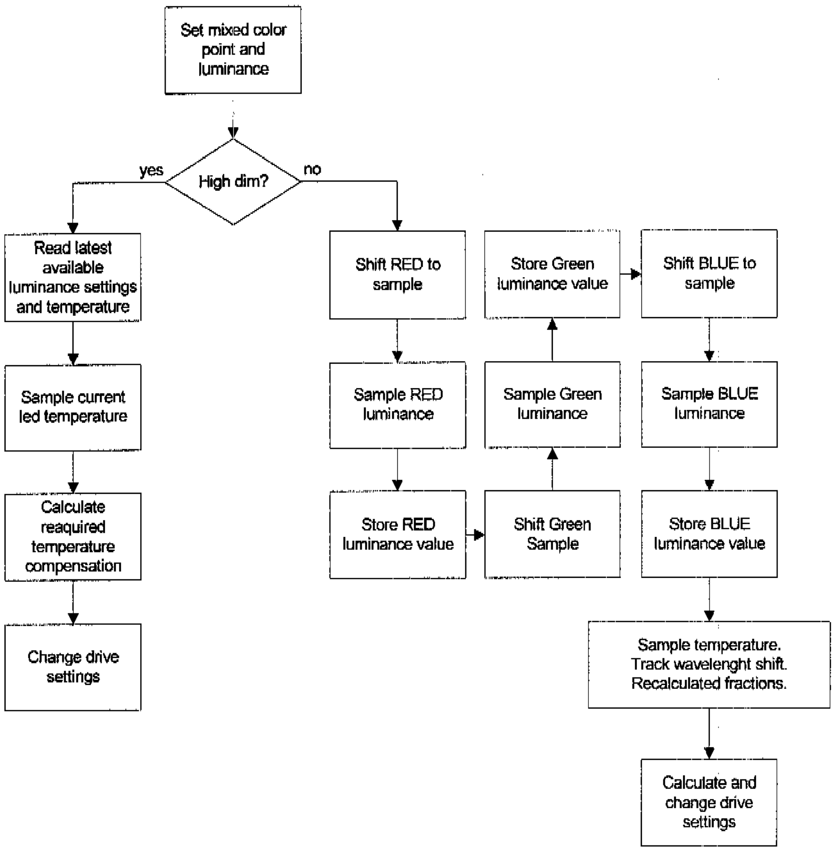
Set mixed color point and luminance
High dim?
yes
no
Read latest available luminance settings and temperature
Sample current led temperature
Calculate reaquired temperature compensation
Change drive settings
Shift RED to sample
Sample RED luminance
Store RED luminance value
Shift Green Sample
Sample Green luminance
Store Green luminance value
Shift BLUE to sample
Sample BLUE luminance
Store BLUE luminance value
Sample temperature. Track wavelenght shift. Recalculated fractions.
Calculate and change drive settings

FIG. 6

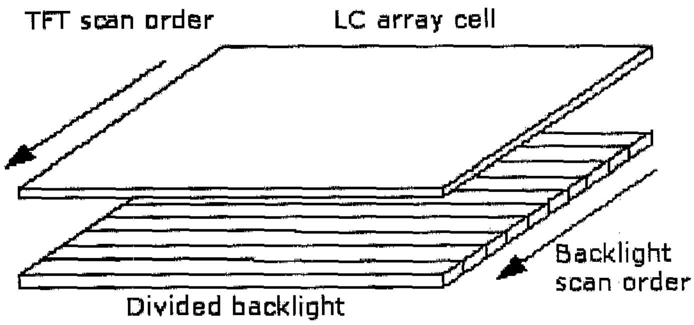
TFT scan order
LC array cell
Backlight scan order
Divided backlight

FIG 7

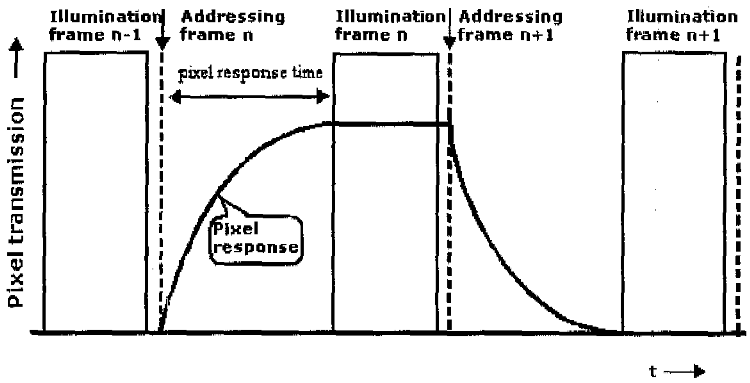
Illumination frame n-1
Addressing frame n
Illumination frame n
Addressing frame n+1
Illumination frame n+1
pixel response time
Pixel response
Pixel transmission
t

FIG 8

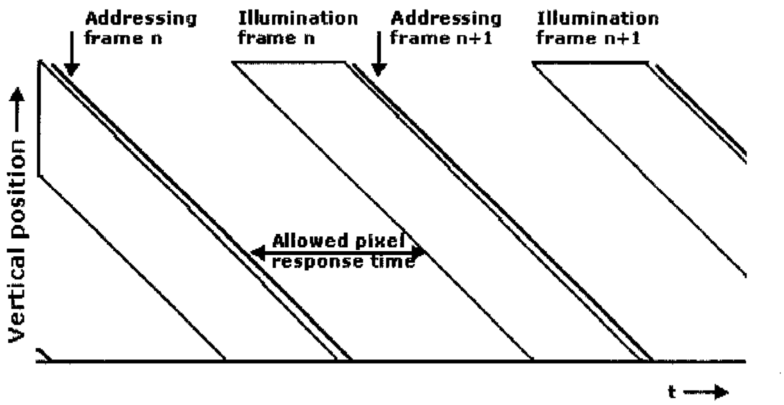
Addressing frame n
Illumination frame n
Addressing frame n+1
Illumination frame n+1
Vertical position
Allowed pixel response time
t

FIG 9

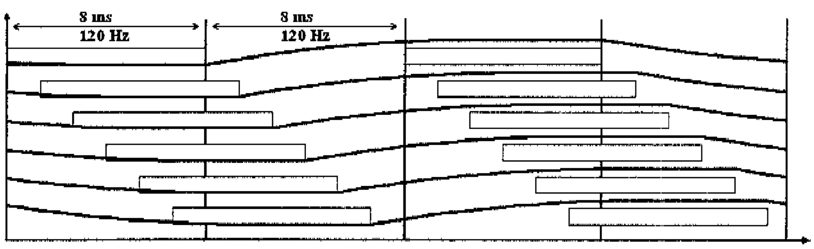
8 ms
120 Hz
8 ms
120 Hz

FIG 10

Europäisches Patentamt
European Patent Office
Office européen des brevets

# EUROPEAN SEARCH REPORT

Application Number
EP 08 15 4289

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y<br><br>X | US 2006/291238 A1 (EPSTEIN KENNETH A [US] ET AL) 28 December 2006 (2006-12-28)<br>* figure 11A *<br>----- | 1,3-10<br><br>2 | INV.<br>F21V8/00 |
| Y | US 2007/064441 A1 (CHEN GA-LANE [US]) 22 March 2007 (2007-03-22)<br>* figures 2,3 *<br>----- | 1,3-10 | |

TECHNICAL FIELDS SEARCHED (IPC)
G02B
F21V

~~The present search report has been drawn up for all claims~~

| Place of search | Date of completion of the search | Examiner |
|---|---|---|
| Munich | 3 April 2009 | Orignac, Xavier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

7

EPO FORM 1503 03.82 (P04C01)

Europäisches Patentamt
European Patent Office
Office européen des brevets

Application Number

EP 08 15 4289

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

1-10

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches Patentamt
European Patent Office
Office européen des brevets

**LACK OF UNITY OF INVENTION**
**SHEET B**

Application Number
EP 08 15 4289

The Search Division considers that the present European patent application does not comply with the requirements of unity of invention and relates to several inventions or groups of inventions, namely:

1. claims: 1 and 3-10 in their dependency on claim 1

   A backlight for a display comprising a heatsink having a fluid forcing device to induce flow over surfaces of the heatsink in such a way as to counter convection induced temperatures differences.

   ---

2. claims: 2 and 3-10 in their dependency on claim 2

   A backlight for a display comprising a mixing section and a heatsink thermally coupled to the light sources of said backlight, the heatsink being integral with at least part of the mixing section.

   ---

3. claims: 11-15

   A controller for a backlight controlling the light output of the light sources of said backlight in response to a feedback signal delivered by temperatures sensors.

   ---

## ANNEX TO THE EUROPEAN SEARCH REPORT ON EUROPEAN PATENT APPLICATION NO. EP 08 15 4289

This annex lists the patent family members relating to the patent documents cited in the above-mentioned European search report.
The members are as contained in the European Patent Office EDP file on
The European Patent Office is in no way liable for these particulars which are merely given for the purpose of information.

03-04-2009

| Patent document cited in search report | Publication date | Patent family member(s) | Publication date |
|---|---|---|---|
| US 2006291238 A1 | 28-12-2006 | CN 101243354 A | 13-08-2008 |
| | | JP 2008547173 T | 25-12-2008 |
| | | KR 20080023700 A | 14-03-2008 |
| | | WO 2007002259 A1 | 04-01-2007 |
| US 2007064441 A1 | 22-03-2007 | CN 1936666 A | 28-03-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 20060290624 A
- US 20060290844 A